# EUROPÄISCHE PATENTSCHRIFT

(11) **EP 4 121 239 B1**
(45) Veröffentlichungstag und Bekanntmachung des Hinweises auf die Patenterteilung: **23.07.2025**
(21) Anmeldenummer: 21725426.7
(22) Anmeldetag: 03.05.2021
(51) Int. Cl.: B29C 64/282, B29C 64/264, B22F 12/45, B33Y 50/02, B33Y 30/00, B33Y 10/00, B22F 12/41, B22F 10/362, B22F 10/28

(54) **VERFAHREN ZUR ADDITIVEN HERSTELLUNG MITTELS DUALER SELEKTIVER BESTRAHLUNG EINES PULVERBETTES UND VORWÄRMUNG**
METHOD FOR ADDITIVE MANUFACTURING BY MEANS OF DUAL SELECTIVE IRRADIATION OF A POWDER BED AND PREHEATING
PROCÉDÉ DE FABRICATION ADDITIVE PAR IRRADIATION SÉLECTIVE DOUBLE D'UN LIT DE POUDRE ET PRÉCHAUFFAGE

(30) Priorität: 15.05.2020 DE 102020206161
(43) Veröffentlichungstag der Anmeldung: 25.01.2023
(73) Patentinhaber: Siemens Energy Global GmbH & Co. KG, 81739 München (DE)
(72) Erfinder: HABERLAND, Christoph, 44791 Bochum (DE); OTT, Michael, 45470 Mülheim an der Ruhr (DE)
(86) Internationale Anmeldenummer: PCT/EP2021/061496
(87) Internationale Veröffentlichungsnummer: WO 2021/228593

(56) Entgegenhaltungen:
- WO-A1-2013/092994
- DE-A1- 102017 213 762
- US-A1- 2018 169 946

## Beschreibung

Die vorliegende Erfindung betrifft Verfahren zur pulverbett-basierten, additiven Herstellung eines Bauteils mit dualer selektiver Bestrahlung und integrierter Vorwärmung, sowie eine entsprechende Vorrichtung.

Die genannten Bauteile sind vorzugsweise für den Einsatz in einer Strömungsmaschine, vorzugsweise im Heißgaspfad einer stationären Gasturbine vorgesehen. Das Bauteil besteht vorzugsweise aus einer Superlegierung, insbesondere einer nickel- oder kobaltbasierten Superlegierung. Alternativ kann das entsprechende Bauteil ein anderes Bauteil sein, wie zum Beispiel ein Hochleistungsbauteil für Anwendungen in der Luftfahrt oder in der Automobilität.

Additive Herstellungsverfahren umfassen beispielsweise als Pulverbettverfahren das selektive Laserschmelzen (SLM) oder Lasersintern (SLS), oder das Elektronenstrahlschmelzen (EBM). Weitere additive Verfahren sind beispielsweise "Directed Energy Deposition (DED)"-Verfahren, insbesondere Laserauftragschweißen, Elektronenstrahl-, oder Plasma-Pulverschweißen, Drahtschweißen, metallischer Pulverspritzguss, sogenannte "sheet lamination"-Verfahren, oder thermische Spritzverfahren (VPS LPPS, GDCS).

Die generative oder additive Fertigung wird aufgrund ihres für die Industrie disruptiven Potenzials zunehmend interessant auch für die Serienherstellung der oben genannten Turbinenkomponenten, wie beispielsweise Turbinenschaufeln oder Brennerkomponenten.

Moderne Gasturbinen sind Gegenstand stetiger Verbesserung, um ihre Effizienz zu steigern. Dies führt allerdings unter anderem zu immer höheren Temperaturen im Heißgaspfad. Die metallischen Materialien für Laufschaufeln, insbesondere in den ersten Stufen, werden ständig hinsichtlich ihrer Festigkeit bei hohen Temperaturen, Kriechbelastung und thermomechanischer Ermüdung, verbessert.

Additive Fertigungsverfahren (englisch: "additive manufacturing") haben sich als besonders vorteilhaft für komplexe oder filigran gestaltete Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils weitgehend auf Basis einer entsprechenden CAD-Datei und der Wahl entsprechender Fertigungsparameter erfolgen kann. Die Herstellung von Gasturbinenschaufeln mittels der beschriebenen pulverbett-basierten Verfahren (PBF englisch für "Powder Bed Fusion") ermöglicht vorteilhaft die Implementierung von neuen Geometrien, Konzepten, Lösungen und/oder Design, was die Herstellungskosten bzw. die Aufbau- und Durchlaufzeit reduziert, den Herstellungsprozess optimiert und beispielsweise eine thermo-mechanische Auslegung oder Strapazierfähigkeit der Komponenten verbessern kann.

Auf konventionelle Art, beispielsweise gusstechnisch, hergestellte Schaufelkomponenten, stehen der additiven Fertigungsroute beispielsweise hinsichtlich ihrer Designfreiheit und auch in Bezug auf die erforderliche Durchlaufzeit und den damit verbundenen hohen Kosten sowie dem fertigungstechnischen Aufwand deutlich nach.

Ein Verfahren und eine Vorrichtung zum generativen Herstellen von Bauteilen ist beispielsweise bekannt aus DE 10 2017 21 37 62 A1. Dort findet ebenfalls eine Art duales oder synchrones selektives Aufschmelzen mit verschiedenen Laserstrahlen, jedoch keine Vorwärmung wie anhand der vorliegenden Erfindung beschrieben, statt.

Ein ähnliches Prinzip einer optischen Bestrahlungseinheit für eine Anlage zur Herstellung von Werkstücken durch Bestrahlen von Pulverschichten mit Laserstrahlung ist beispielsweise bekannt aus EP 2 335 848 A1.

Ein Verfahren und eine Vorrichtung zur generativen Herstellung mit einer Vorwärmung ist weiterhin bekannt aus DE 10 2010 048 335 A1, wobei jedoch keine synchrone oder duale selektive Bestrahlung angewendet wird.

Weiterhin ist eine Vorrichtung zur additiven Fertigung mit Elektronenstrahlvorheizung, Laserverfestiger und entsprechendem Verfahren bekannt aus DE 10 2015 201 637 A1. Hier wird insbesondere eine elektronenstrahlbasierte Vorwärmung verwendet, welche jedoch zum Vermeiden von Heiß- oder Erstarrungsrissen verwendet wird, und nicht wie nachfolgend, im Zusammenhang mit der vorliegenden Erfindung beschrieben.

Das Dokument DE 10 2014 204 580 A1 beschreibt eine Vorrichtung, die zumindest oberhalb einer Bauteilplattform eine Heizeinrichtung zum segmentweisen Erwärmen einer Oberfläche einer zu verfestigenden Pulverschicht vorsieht.

Die Dokumente WO 2013/092994 und US2018/169946 gehören ebenfalls zum Stand der Technik.

Bei der additiven Fertigung eines Bauteils aus einem Pulverbett, d.h. mittels "powder bed fusion" erfolgt eine Vorwärmung des zu verarbeitenden Materials bekannterweise auch über eine Beheizung einer Bauplattform. Solche Vorwärmmaßnahmen sind jedoch unzureichend, da eine solche Plattformheizung normalerweise nur Vorwärmtemperaturen von ca. 200°C erlaubt, und somit nicht signifikant zum Abbau der Eigenspannungen beitragen kann. Abhängig vom jeweilig verwendeten Material und der Pulverkörnung ist die Wärmeleitung unzureichend, sodass der Vorwärmeffekt, insbesondere bei der Verarbeitung von nickel- oder kobaltbasierten Superlegierungen, mit zunehmender Aufbauhöhe stark abnimmt. Zusätzlich kommt bei diesen Legierungen, deren Gammaphase (vgl."γ") einen hohen Anteil an sogenannten (Gammastrich) y'-Ausscheidungen bilden kann, hinzu, dass diese deswegen als schwer oder als gar nicht schweißbar gelten, und daher bei hoher Temperatur aber noch unterhalb der γ/γ'-Solvustemperatur (also unterhalb des Einsetzens der γ'-Ausscheidung) vorgewärmt werden müssen, um die Schweißeignung zu fördern.

Die oben genannten gängigen Konzepte zur Vorwärmung können ein erforderliches Temperaturniveau, von beispielsweise zwischen 400 °C und 500 °C nicht oder jedenfalls nicht zuverlässig über die gesamte Bauhöhe des Bauteils hinweg erzielen.

Selbst Konzepte, welche Temperaturen von 1000 °C im Bauraum einer entsprechenden Herstellungsanlage durch induktive Erwärmung erreichen, haben den Nachteil, dass einerseits eine starke Versinterung des umgebenden Pulvers erfolgt. Außerdem findet auch in diesem Fall eine unzureichende Wärmeleitung statt, die dazu führt, dass - ab einer gewissen Bauteilhöhe - die Vorwärmtemperatur nicht mehr ausreicht, um den gewünschten Effekt zu erzielen.

Es ist daher eine Aufgabe der vorliegenden Erfindung, Mittel für ein verbessertes Wärmemanagement bereitzustellen, welches die oben beschriebenen Probleme löst, um insbesondere die Schweißbarkeit nominell schwer oder kaum schweißbarer Legierungen zu ermöglichen und dabei einen signifikant verbesserten Spannungsabbau und/oder eine deutlich reduzierte Rissneigung des verarbeiteten Materials zu erreichen.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zur pulverbett-basierten, additiven Herstellung eines Bauteils, umfassend das selektive Bestrahlen einer Schicht aus einem pulverförmigen Werkstoff, wodurch, vorzugsweise durch selektives Lasersintern, selektives Laserschmelzen oder Elektronenstrahlschmelzen, das Bauteil schichtweise aufgebaut wird. Das Bestrahlen erfolgt mit einem ersten Energiestrahl und einem, von diesem verschiedenen, zweiten Energiestrahl, wobei der zweite Energiestrahl den ersten Energiestrahl ringförmig umgibt. Diese ringförmige Anordnung ist so zu verstehen, dass entweder der ganze zweite Energiestrahl, den ersten ringförmig umgeben kann oder lediglich ein Strahlfokus, beispielsweise auf einer entsprechenden Herstellungs- oder Pulverfläche der entsprechenden Schicht.

Das Verfahren umfasst weiterhin das aselektive, non-selektive, delokalisierte oder globale Bestrahlen oder Erwärmen der Schicht, wobei ein Großteil, beispielsweise ein überwiegender oder großer Teil oder die ganze Herstellungsfläche der Schicht auf eine Temperatur von mindestens einem Viertel der Temperatur erwärmt wird, welche die Schicht durch das beschriebene selektive Bestrahlen erfährt. Die zuletzt genannte Temperatur entspricht zweckmäßigerweise mindestens einer Schmelztemperatur des Werkstoffs für den Aufbau des Bauteils. Gemäß dem Prinzip der PBF-Verfahren erfolgt die Bestrahlung, Versinterung bzw. das Aufschmelzen des Werkstoffs sehr lokal beispielsweise im Strahlfokus und/oder in einem wärmebeeinflussten Bereich (vgl. auf Englisch "heat-affected zone").

In einer Ausgestaltung wird ein Großteil der Schicht durch das aselektive Erwärmen auf eine Temperatur von mindestens einem Drittel oder sogar knapp der Hälfte der Temperatur erwärmt, welche die Schicht durch das selektive Bestrahlen erfährt.

Durch das beschriebene Verfahren, insbesondere durch die vorgestellte kombinierte und gezielte Wärmeanwendung mit der aselektiven Erwärmung der Schicht, wird vorteilhafterweise zum einen eine Reduzierung der Makroeigenspannungen erreicht, die prozessinhärent sind und für so gut wie alle Materialien anfallen. Weiterhin wird durch die lokale Vorwärmung als Teil der selektiven Bestrahlung die Verarbeitung von z.B. schwer schweißbaren Nickelbasis-Superlegierungen ermöglicht, indem Mikroeigenspannungen durch Seigerungseffekte oder Segregation reduziert werden. Durch solche Spannungen verursachte Risse entstehen während des Prozesses nach neuesten Erkenntnissen maßgeblich dadurch, dass weiterhin eine Heilung der Risse oder eine Speisung dieser durch vorhandene Schmelze ("backfeeding") nicht mehr möglich ist.

Eine Überlagerung beider Eigenspannungen führt in der Regel in einer nachfolgenden Wärmebehandlung zu einem signifikanten Auftreten von Rissen, insbesondere durch sogenanntes "strain age cracking" oder "post weld heat treatment cracking" bei den genannten Legierungen oder Werkstoffen.

In solchen (nachträglichen) Wärmenachbehandlungen kann insbesondere auch die eigentliche Ausscheidung für die Härtung des Werkstoffs erfolgen. Diese wird üblicherweise mit dem Spannungsabbau überlagert, was ohne die Mittel der vorliegenden Erfindung Makrorisse besonders begünstigen würde.

Eine gleichzeitige Reduzierung von Makro- und Mikroeigenspannungen durch die Kombination einer - wie beschrieben - lokalen und globalen Vorwärmung wirkt insbesondere positiv auf die Vermeidung der o.g. Rissbildungseffekte. Darüber hinaus sind Sintereffekte aufgrund der noch ausreichend geringen globalen Vorwärmtemperatur nicht zu erwarten. Dadurch ist partiell auch von einer erheblichen Verbesserung der Oberflächenqualität und der Oberflächenauflösung im Vergleich zu konventionellen elektronenstrahlbasierten additiven Verfahren auszugehen.

In einer Ausgestaltung stellt der erste Energiestrahl einen Aufschmelzlaser oder ersten Laser dar, und der zweite Energiestrahl einen zweiten, weiteren Laserstrahl, welcher vorzugsweise eine geringere Strahlungsintensität aufweist als der Aufschmelzlaser. Durch diese Ausgestaltung kann eine selektive Bestrahlung mit einem vorteilhaften Wärmeeintrag in die Schicht erreicht werden, insbesondere ein Temperaturgradient, welcher in der Schicht auftritt, reduziert werden.

In einer Ausgestaltung bewirkt der weitere Laserstrahl eine lokale Erwärmung, insbesondere Vorwärmung der Schicht auf eine Temperatur von über 400 °C, bevorzugt über 500 °C. Durch diese Ausgestaltung können mit Vorteil insbesondere ein kleines Materialvolumen rund um den Bearbeitungsfokus des ersten Lasers bzw. des Aufschmelzlasers auf einer erhöhten Temperatur gehalten und damit über Gebühr große Temperaturgradienten vorteilhafterweise vermieden werden.

In einer Ausgestaltung weisen der Aufschmelzlaser und/oder der weitere Laser oder Laserstrahl eine Wellenlänge im Infrarotbereich auf.

In einer Ausgestaltung erfolgt das aselektive Erwärmen bei einer Temperatur zwischen 50 °C und 100 °C unterhalb einer Anfangstemperatur für das Ausbilden von Phasenausscheidungen, insbesondere für das Ausbilden oder Ausscheiden der Gammastrichphase des erkstoffs, und zusätzlich optional bei einer Temperatur von 400°C und 500°C.

Bei dieser Ausgestaltung erfolgt das selektive Erwärmen vorteilhafterweise ausreichend weit entfernt von einer Einsatztemperatur für die Phasenausscheidung der Gammastrichphase. Die genannte Einsatztemperatur oder Anfangstemperatur kann eine Temperatur bezeichnen, ab der weiterhin ein Wärmeausdehnungskoeffizienten des Werkstoffs temperaturbedingt reduziert wird. Die Temperatur, auf die ein Großteil der Schicht flächendeckend erwärmt wird, wird durch diese Ausgestaltung vorteilhafterweise optimiert und abgestimmt auf das selektive Bestrahlen der Schicht. Die genannte Temperatur wird insbesondere hoch genug gewählt, um einen verlässlichen Spannungsabbau während des Aufbaus des Bauteils und danach zu reduzieren, und gleichzeitig ein Ausscheiden oder Bilden der Gammastrichphase, welche ja einem Strukturergebnis oder Schweißresultat während der Bauteilherstellung abträglich wäre, zu verhindern.

In einer Ausgestaltung erfolgt auch das aselektive Erwärmen bei einer Temperatur von knapp unterhalb einer Sintertemperatur des Werkstoffs. Diese Ausgestaltung ist vorteilhafterweise konsistent mit der zuvor beschriebenen Ausgestaltung und verhindert zusätzlich das Ansintern von Werkstoff, welcher für das hergestellte Bauteil keine Verwendung findet und gegebenenfalls aus Hohlräumen oder aus Stützstrukturen des Bauteils - in gesinterter Form - aufwendig wieder entfernt werden müsste. Unterhalb der Sintertemperatur wird normalerweise auch verlässlich sichergestellt, dass die Ausscheidung einer Gammastrichphase ausbleibt.

In einer Ausgestaltung erfolgt das aselektive Erwärmen durch eine induktive Beheizung einer Baukammer, z.B. einer entsprechenden additiven Herstellungsanlage, durch eine Strahlungsheizung, wie zum Beispiel einen Laserarray, ein Feld von Laserdioden, einen Infrarotstrahler, oder über eine Beheizung einer Bauplattform.

In einer Ausgestaltung wird das aselektive Erwärmen zum Vorwärmen der Schicht durchgeführt. Gemäß dieser Ausgestaltung kann das aselektive Erwärmen vor, aber natürlich zusätzlich gleichzeitig auch zu dem Schritt des selektiven Bestrahlens durchgeführt werden.

In einer Ausgestaltung wird das aselektive Erwärmen gleichzeitig mit dem selektiven Bestrahlen der Schicht durchgeführt.

Wie oben beschrieben, erlaubt das aselektive Erwärmen das zuverlässige Verhindern von Makrorissen und bewirkt mit Vorteil einen Spannungsabbau in dem Werkstoff oder in dem aufgeschmolzenen Werkstoff.

In einer Ausgestaltung stellt der Werkstoff eine schwer schweißbare Legierung dar, insbesondere eine y'-aushärtende nickel- oder kobaltbasierte Superlegierung.

In einer Ausgestaltung wird das (fertig) hergestellte Bauteil einer thermischen Nachbehandlung unterzogen. Diese Nachbehandlung wird vorzugsweise vorgesehen, um eine (zusätzliche) Spannungsrelaxation zu bewirken und/oder eine Ausscheidungshärtung durch Seigerung bzw. Ausbilden der Gammastrichphase zu provozieren. Die erfindungsgemäßen Vorteile manifestieren sich potentiell auch ohne eine thermische Nachbehandlung können jedoch in besonders vorteilhaftem Maße auftreten, wenn eine solche thermische Nachbehandlung durchgeführt wird.

In einer Ausgestaltung werden der erste Energiestrahl und der zweite Energiestrahl über eine gemeinsame Optik oder optische Einheit auf die Schicht gerichtet bzw. fokussiert. Bei der genannten Optik kann es sich, im Falle von Elektronenstrahlen des ersten Energiestrahls und des zweiten Energiestrahls auch um eine Elektronenoptik handeln.

In einer Ausgestaltung werden der Aufschmelzlaser und der weitere Laser über einen Strahlteiler oder halbdurchlässigen Spiegel der gemeinsamen Optik zugeführt.

Diese Ausgestaltung(en) erlaubt mit Vorteil eine besonders einfache Strahlführung für das selektive Bestrahlen bzw. eine besonders zuverlässige oder zuverlässig synchrone selektive Bestrahlung mit dem ersten Energiestrahl und dem zweiten Energiestrahl.

Ein weiterer Aspekt der vorliegenden Erfindung betrifft eine Vorrichtung zur pulverbett-basierten, additiven Herstellung eines Bauteils, welche eine Bauplattform aufweist, sowie eine Beschichtungseinrichtung, einen Aufschmelzlaser, einen weiteren Laser und eine gemeinsame Optik für den Aufschmelzlaser und den weiteren Laser, wie oben beschrieben, und wobei die Vorrichtung weiterhin eine Einrichtung zum aselektiven Erwärmen der Schicht umfasst, insbesondere eine Einrichtung zum induktiven Beheizung einer Baukammer und/oder eine Strahlungsheizung, vorzugsweise einen Infrarotstrahler. Ein besonderer Vorteil der beschriebenen Vorrichtung ist, dass diese Vorrichtung bzw. Anlagentechnik im Gegensatz zu hohen globalen Vorwärmtemperaturen keine signifikanten

Anpassungen des Hardwarekonzeptes im Bauraum erfordert. Damit ist vorteilhafterweise sogar eine Nachrüstmöglichkeit für bereits bestehende pulverbettbasierte Herstellungsanlagen oder SLM-Anlagen denkbar.

Ausgestaltungen, Merkmale und/oder Vorteile, die vorliegend im Zusammenhang mit dem Verfahren beschrieben sind, können ferner die Vorrichtung betreffen, und umgekehrt.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Weitere Einzelheiten der Erfindung werden nachfolgend anhand der Figuren beschrieben.
- Figur 1: zeigt eine schematische Seitenansicht einer Vorrichtung gemäß einer Ausführungsform der vorliegenden Erfindung;
- Figur 2: deutet eine schematische Draufsicht zweier Laserstrahlen, die unter Einsatz der in Figur 1 dargestellten Vorrichtung erzeugt werden an, und
- Figur 3: deutet schematisch Strahlintensitäten der in Figur 2 dargestellten Laserstrahlen an.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen; vielmehr können einzelne Elemente, zur besseren Darstellbarkeit und/oder zum besseren Verständnis übertrieben dick oder groß dimensioniert dargestellt sein.

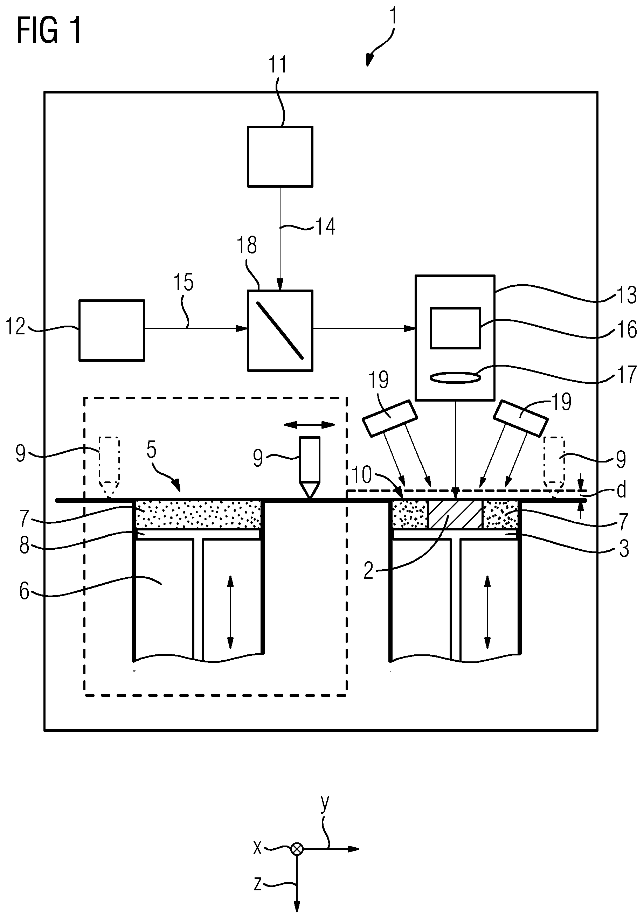

Figur 1 zeigt eine Vorrichtung 1 gemäß einer Ausführungsform der vorliegenden Erfindung, die zur pulverbett-basierten, additiven Herstellung eines Bauteils 2 oder eines Bauteilabschnitts dient; insbesondere zum selektiven Lasersintern, selektiven Laserschmelzen oder Elektronenstrahlschmelzen.

Bei dem Bauteil 2 kann es sich um ein Bauteil einer Strömungsmaschine, beispielsweise um ein Bauteil für den Heißgaspfad einer Gasturbine, handeln. Insbesondere kann das Bauteil eine Lauf- oder Leitschaufel, ein Ringsegment, ein Brennerteil oder eine Brennerspitze, eine Zarge, eine Schirmung, ein Hitzeschild, eine Düse, eine Dichtung, einen Filter, eine Mündung oder Lanze, einen Resonator, einen Stempel oder einen Wirbler bezeichnen, oder einen entsprechenden Übergang, Einsatz, oder ein entsprechendes Nachrüstteil. Alternativ kann das Bauteil ein anderes Bauteil bezeichnen, insbesondere ein Bauteil für Anwendungen in der Luftfahrt oder in der Automobilität.

Die Vorrichtung 1 umfasst eine Bauplattform 3, die innerhalb einer Baukammer 4 auf- und abwärts in vertikaler z-Richtung bewegbar, insbesondere absenkbar, ist. Ferner ist eine Pulverbevorratung 5 vorgesehen. Diese umfasst eine Pulverkammer 6 zur Aufnahme von pulverförmigem Werkstoff 7, einen Pulverzuführkolben 8, der innerhalb der Pulverkammer 6 auf- und abwärts in z-Richtung bewegbar ist, und eine Beschichtungseinrichtung mit einer Rakel 9, die in y-Richtung hin und her bewegbar und dazu ausgelegt ist, in der Pulverkammer 6 enthaltenen Werkstoff 7 zur Baukammer 4 zu transportieren und im Bereich einer Aufbauzone der Baukammer 4 mit einer vorbestimmten Schichtdicke (vgl. Bezugszeichen d) gleichmäßig zu verteilen.

Ferner weist die Vorrichtung 1 eine erste Strahlquelle auf, die ein Aufschmelzlaser 11 ist, und eine zweite Strahlquelle, die ein weiterer, zweiter Laser 12 ist. Weiterhin weist die Vorrichtung 1 eine gemeinsame Optik oder optische Einheit 13 für die erste Strahlquelle bzw. den ersten Strahl 11 und die zweiten Strahlquelle bzw. den zweiten Strahl 12 auf.

Bei der ersten Strahlquelle (erster Energiestrahl) und der zweiten Strahlquelle (zweiter Energiestrahl)handelt es sich vorzugsweise jeweils um Laser oder Laserstrahlen, insbesondere um solche Laser, die Laserstrahlen 14 und 15 mit Wellenlängen im Infrarotbereich emittieren, wie beispielsweise Nd-Yag- oder CO₂-Laser oder dergleichen (vgl. SLM). Alternativ kann es sich bei den genannten Strahlquellen/Strahlen auch um Teilchenstrahlung, wie Elektronenstrahlen (vgl. EBM), handeln.

Die Optik oder optische Einheit 13 umfasst einen Scanner 16 und eine F-Theta-Linse 17. Zwischen dem ersten Energiestrahl 11 und dem zweiten Energiestrahl 12 und der optischen Einheit 13 ist ein halbdurchlässiger Spiegel oder Strahlteiler 18 angeordnet, der den Laserstrahl 14 des ersten Energiestrahls 11 und des zweiten Energiestrahls 15 des Vorheizlasers 12 gemeinsam zur optischen Einheit 13 lenkt, von wo aus die Energiestrahlen über den Scanner 16 und die F-Theta-Linse 17 - basierend auf Schichtinformationen einer herzustellenden Bauteilschicht 10, die normalerweise durch rechnerunterstützte Modellierung aus einer CAD-Datei softwaretechnisch generiert werden - auf die Aufbauzone gerichtet werden.

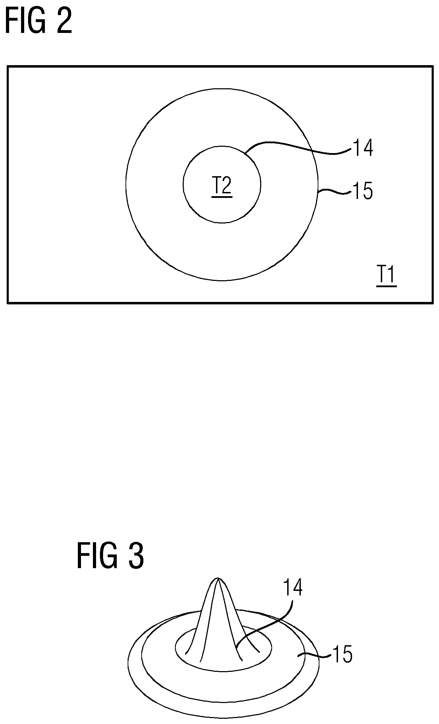

Zur Herstellung eines Bauteils 2 oder eines Bauteilabschnitts unter Einsatz der Vorrichtung 1 wird die Bauplattform 3 in einem ersten Schritt in eine Position bewegt, die um ein Maß unterhalb des Aufbaus liegt, das der Schichtstärke d der nachfolgend zu generierenden Bauteilschicht 10 entspricht, wobei die Schichtdicke d normalerweise in einem Bereich zwischen 10 und 100 µm, insbesondere zwischen 20 und 40 µm, liegt. Der Pulverzuführkolben 8 wird um ein analoges Maß oberhalb der Aufbauzone positioniert. Daraufhin wird die Rakel 9 ausgehend von der in Figur 1 ganz links in gestrichelten Linien dargestellten Position in die ganz rechte, ebenfalls gestrichelt dargestellte Position verfahren, so dass eine Schicht 10 des pulverförmigen Bauteilwerkstoffes 7 gleichmäßig auf der Bauteilplattform 3 verteilt wird. Anschließend wird diese Schicht 10 im Bereich der Aufbauzone lokal verschmolzen und verfestigt. Hierzu werden die Strahlen 14 und 15 auf den Strahlteiler 18 derart gerichtet, dass der im Querschnitt kreisförmige Laserstrahl oder Laserfokus 14 des Bearbeitungslasers 11 ringförmig von dem Laserstrahl 15 des Vorheizlasers 12 bzw. dessen Fokus umgeben ist, wie es in Figur 2 schematisch dargestellt ist. Dies wird vorliegend erreicht, indem der Bearbeitungslaser 11 im Gauß-Modus und der Vorheizlaser 12 im "Donut-" oder "Bagelmodus" betrieben wird.

Die Strahlungsintensität des Laserstrahls 14 des Aufschmelzlaser 11 ist dabei vorzugsweise wesentlich höher als die des Laserstrahls 15 des weiteren Lasers 12, wie es in Figur 3 schematisch in der perspektivischen Darstellung gezeigt ist.

Der weitere Laserstrahl 15 bewirkt vorzugsweise eine selektive bzw. lokale Erwärmung, insbesondere Vorwärmung, einer jeden Schicht 10 auf eine Temperatur von mindestens 400 °C, vorzugsweise mindestens 500 °C. Ein Wärmeeintrag des weiteren Laserstrahls 15 wird während des Aufbaus des Bauteils 2 zweckmäßigerweise mit einem Wärmeeintrag des Laserstrahls 14 des Aufschmelzlaser 11 überlagert, sodass der Schmelzpunkt des Werkstoffs 7 zweckmäßigerweise überschritten und die Struktur für das Bauteil verfestigt werden kann.

Die Laserstrahlen 14 und 15 werden ausgehend von dem Strahlteiler 18 gemeinsam zur optischen Einheit 13 gelenkt, von wo sie über den Scanner 16 und die Linse 17 auf die Aufbauzone gerichtet werden. Die gemeinsame Bewegung der Laserstrahlen 14 und 15 relativ zur Aufbauzone wird dabei in Abhängigkeit einer Schichtinformation der jeweils herzustellenden Bauteilschicht 10 (selektiv) gesteuert.

Dank der ringförmigen Anordnung des Laserstrahls 15 des Vorheizlasers 12 um den Laserstrahl 14 des Bearbeitungslasers 11 herum heizt der Laserstrahl 15 das letztendlich durch den Laserstrahl 14 zu verschmelzende Pulver nicht nur vor, sondern zum Teil auch nach, da der Laserstrahl 15 dem Laserstrahl 14 sowohl vor- als auch nachläuft. Entsprechend wird hohen Temperaturgradienten während des Verschmelzens und damit einer Heißrissbildung effektiv entgegengewirkt, wobei die Strahlungsintensitäten der Laserstrahlen 14 und 15 unabhängig voneinander gewählt und somit optimal an den zu verarbeitenden Bauteilwerkstoff 7, die zu fertigende Schichtstärke d und an die nachträglich beschriebene aselektive, großflächige oder globale Erwärmung angepasst werden können.

Somit ist auch die Bearbeitung schwer oder bisher kaum oder gar nicht schweißbarer Bauteilwerkstoffe möglich, wie die Bearbeitung einer γ' aushärtenden Nickel-Basis-Superlegierung, insbesondere mit einem hohen Anteil an y'-Ausscheidungen, um nur ein Beispiel zu nennen. Zur Fertigung der nächsten und darauffolgenden Schichten wird die Bauteilplattform 3 jeweils erneut um eine Schichtstärke d abgesenkt, pulverförmiger Bauteilwerkstoff 7 aufgetragen und selektiv verschmolzen.

Ein wesentlicher Vorteil des erfindungsgemäßen Verfahrens besteht zum einen in der zuvor beschriebenen Vermeidung einer Heißrissbildung dank der flexibel einstellbaren sowie lokalen Vorheizung und kontrollierten Abkühlung des zu verschmelzenden bzw. verschmolzenen Pulvers. Zum anderen ist aber auch der apparative Aufbau einfach, da der Aufschmelzlaser 11 und der weitere Laser 12 die optische Einheit 13 ebenso wie den Strahlteiler 18 gemeinsam nutzen, was zu vergleichsweise geringen Kosten und einem geringen Platzbedarf führt. Darüber hinaus ist auch die Abstimmung der Bewegungen der Laserstrahlen 14 und 15 unproblematisch, da auch die Steuerung der Bewegungen stets gemeinsam über die optische Einheit 13 erfolgen kann.

Die Vorrichtung 1 weist weiterhin eine Einrichtung 19 zum aselektiven Erwärmen einer jeden Schicht 10 auf. Die genannte Einrichtung kann - wie dargestellt - eine Strahlungsheizung, wie einen Infrarotstrahler oder einen Laser(dioden)array betreffen. Alternativ kann es sich bei der Einrichtung 19 um eine induktive Beheizung der Baukammer 4 oder, anders als dargestellt in Figur 1, um eine Beheizung der Bauplattform 3 handeln. Wärme, die durch die Einrichtung 19 in eine jede Schicht 10 eingetragen werden kann (vorliegend durch die Pfeile angedeutet) erwärmt vorzugsweise einen Großteil der Schicht 10, um (wie oben beschrieben) Makrorisse während der Herstellung des Bauteils 2 als Ganzes im Zusammenwirken mit der erfindungsgemäßen synchronen selektiven Bestrahlung zu verhindern.

In Figur 2 ist durch den Rahmen um die Laserfoki der Strahlen 14 und 15 angedeutet, dass durch die vorliegende Erfindung vorteilhafterweise eine aselektive oder globale Erwärmung eines Großteils der Schicht 10 oder dessen Schichtfläche bei einer Temperatur T1 erfolgt. Gemäß der vorliegenden Erfindung wird die Temperatur T1 derart gewählt, dass sie mindestens einem Viertel der Temperatur T2 entspricht, welche die jeweilige Schicht 10 durch das selektive Bestrahlen erfährt.

Zweckmäßigerweise liegt die Temperatur T2 lokal zumindest knapp oberhalb einer Sinter-, oder Solidustemperatur. Vorzugsweise liegt die Temperatur T2 mindestens knapp oberhalb einer Schmelztemperatur des Werkstoffs 7.

Alternativ kann beispielsweise die Schicht 10 aselektiv auf eine Temperatur von mindestens einem Drittel oder sogar knapp der Hälfte der Temperatur T2 erwärmt werden.

Beispielsweise kann das aselektive Erwärmen bei einer Temperatur T1 von zwischen 400 °C und 500 °C erfolgen.

Die aselektive Erwärmer erfolgt bei einer Temperatur zwischen 50 °C und 100 °C unterhalb einer Anfangstemperatur für das Ausbilden von Phasenausscheidungen, insbesondere für das Ausbilden einer Gammastrichphase (γ/γ'-Solvustemperatur) des Werkstoffs 7.

Weiterhin alternativ oder zusätzlich erfolgt das aselektive Erwärmen des Großteils der Schicht 10 vorzugsweise unterhalb einer Sintertemperatur des Werkstoffs 7.

Weiterhin erfolgt das aselektive Erwärmen vorteilhafterweise zum Vorwärmen der Schicht 10 und/oder gleichzeitig mit dem selektiven Bestrahlen der Schicht 10, wie oben beschrieben.

Das fertiggestellte Bauteil 2 kann weiterhin einer thermischen Nachbehandlung unterzogen werden, um beispielsweise eine Spannungsrelaxation und/oder Ausscheidung oder Seigerung von Legierungselementen, wie Karbiden, Nitriden oder intermetallischen Phasen, zur Härtung (γ'-Ausscheidung) zu bewirken. Solch eine Wärmebehandlung kann ein sogenanntes Lösungsglühen und ein oder mehrere anschließende "Reifungsschritte" mit jeweils spezifisch eingestellter Aufheizrate, Haltezeit und Abkühlrate, umfassen.

Weiterhin kann sich ein so genannter "HIP"-Prozess ("hot isostatic pressing"), d.h. die Anwendung von isostatischem mechanischen Druck im Anschluss an den additiven Aufbau des Bauteils 2 und/oder an die thermische Nachbehandlung, angewendet werden.

## Patentansprüche

1. Verfahren zur pulverbett-basierten, additiven Herstellung eines Bauteils (2), umfassend das
- selektive Bestrahlen einer Schicht (10) aus einem pulverförmigen Werkstoff (7) mit einem ersten Energiestrahl (14) und einem, von diesem verschiedenen, zweiten Energiestrahl (15), wobei der zweite Energiestrahl (15) den ersten Energiestrahl (14) ringförmig umgibt, wobei der erste Energiestrahl (14) einen Aufschmelzlaser und der zweite Energiestrahl (15) einen weiteren Laserstrahl darstellt, welcher eine geringere Strahlungsintensität aufweist als der Aufschmelzlaser, wobei der weitere Laserstrahl eine lokale Erwärmung, insbesondere Vorwärmung, der Schicht auf eine Temperatur von über 500 °C bewirkt, und
- aselektives Erwärmen der Schicht (10), wobei ein Großteil der Schicht (10) auf eine Temperatur (T1) von mindestens einem Viertel der Temperatur (T2) erwärmt wird, welche die Schicht (10) durch das selektive Bestrahlen erfährt, wobei das aselektive Erwärmen bei einer Temperatur zwischen 50 °C und 100 °C unterhalb einer Anfangstemperatur für das Ausbilden von Phasenausscheidungen, insbesondere für das Ausbilden einer Gammastrichphase des Werkstoffs, erfolgt.

2. Verfahren gemäß Anspruch 1, wobei das aselektive Erwärmen bei einer Temperatur zwischen 400 °C und 500 °C erfolgt.

3. Verfahren gemäß Anspruch 1 oder 2, wobei das aselektive Erwärmen unterhalb einer Sintertemperatur des Werkstoffs (7) erfolgt.

4. Verfahren gemäß einem der vorhergehenden Ansprüche, wobei das aselektive Erwärmen durch eine induktive Beheizung einer Baukammer (4), eine Strahlungsheizung, insbesondere Infrarotstrahler, oder über eine Beheizung einer Bauplattform (3), erfolgt.

5. Verfahren gemäß einem der vorhergehenden Ansprüche, wobei das aselektive Erwärmen zum Vorwärmen der Schicht (10) durchgeführt wird.

6. Verfahren gemäß einem der vorhergehenden Ansprüche, wobei das aselektive Erwärmen gleichzeitig mit dem selektiven Bestrahlen der Schicht (10) durchgeführt wird.

7. Verfahren gemäß einem der vorhergehenden Ansprüche, wobei der Werkstoff (7) eine schwer schweißbare Legierung darstellt, insbesondere eine γ' aushärtende nickel- oder kobaltbasierte Superlegierung.

8. Verfahren gemäß einem der vorhergehenden Ansprüche, wobei das hergestellte Bauteil (2) einer thermischen Nachbehandlung unterzogen wird.

9. Verfahren gemäß einem der vorhergehenden Ansprüche, wobei der erste Energiestrahl (14) und der zweite Energiestrahl (15) über eine gemeinsame Optik (13) auf die Schicht gerichtet werden.

10. Verfahren gemäß einem der vorhergehenden Ansprüche, wobei der Aufschmelzlaser (14) und der weitere Laserstrahl (15) über einen halbdurchlässigen Strahlteiler (18) einer gemeinsamen Optik (13) zugeführt werden.

11. Vorrichtung (1) zur pulverbett-basierten, additiven Herstellung eines Bauteils (2), welche zur Durchführung eines Verfahrens nach einem der vorhergehenden Ansprüche eingerichtet ist und eine Bauplattform (3), eine Beschichtungseinrichtung (5), einen Aufschmelzlaser (11), einen weiteren Laser (12) und eine gemeinsame Optik (13) für den Aufschmelzlaser (11) und den weiteren Laser (12) umfasst, und wobei die Vorrichtung (1) weiterhin eine Einrichtung (19) zum aselektiven Erwärmen der Schicht (10) umfasst, insbesondere eine Einrichtung zum induktiven Beheizung einer Baukammer, eine Strahlungsheizung, vorzugsweise einen Infrarotstrahler.

## Claims

1. Method for the powder bed-based additive manufacturing of a component (2), comprising
- selective irradiation of a layer (10) composed of a pulverulent material (7) with a first energy beam (14) and a second energy beam (15), different from the first, wherein the second energy beam (15) ring-shapedly surrounds the first energy beam (14), wherein the first energy beam (14) constitutes a melting laser and the second energy beam (15) constitutes a further laser beam, having a lower radiation intensity than the melting laser, wherein the further laser beam brings about a local heating, in particular preheating, of the layer to a temperature of above 500°C, and
- aselective heating of the layer (10), wherein a large portion of the layer (10) is heated to a temperature (T1) of at least one quarter of the temperature (T2) which the layer (10) experiences as a result of the selective irradiation, wherein the aselective heating is effected at a temperature of between 50°C and 100°C below an initial temperature for the formation of phase precipitates, in particular for the formation of a gamma prime phase of the material.

2. Method according to Claim 1, wherein the aselective heating is effected at a temperature of between 400°C and 500°C.

3. Method according to Claim 1 or 2, wherein the aselective heating is effected below a sintering temperature of the material (7).

4. Method according to any of the preceding claims, wherein the aselective heating is effected by an inductive heating of a building chamber (4), a radiant heating facility, in particular infrared emitter, or by way of a heating of a build platform (3).

5. Method according to any of the preceding claims, wherein the aselective heating is carried out for the purpose of preheating the layer (10).

6. Method according to any of the preceding claims, wherein the aselective heating is carried out simultaneously with the selective irradiation of the layer (10).

7. Method according to any of the preceding claims, wherein the material (7) constitutes an alloy which is difficult to weld, in particular a γ'-hardening nickel- or cobalt-based superalloy.

8. Method according to any of the preceding claims, wherein the manufactured component (2) is subjected to a thermal aftertreatment.

9. Method according to any of the preceding claims, wherein the first energy beam (14) and the second energy beam (15) are directed at the layer via a common optical unit (13).

10. Method according to any of the preceding claims, wherein the melting laser (14) and the further laser beam (15) are fed to a common optical unit (13) via a semi-transparent beam splitter (18).

11. Apparatus (1) for the powder bed-based additive manufacturing of a component (2), which apparatus is configured for carrying out a method according to any of the preceding claims and comprises a build platform (3), a coating device (5), a melting laser (11), a further laser (12) and a common optical unit (13) for the melting laser (11) and the further laser (12), and wherein the apparatus (1) furthermore comprises a device (19) for the aselective heating of the layer (10), in particular a device for the inductive heating of a building chamber, a radiant heating facility, preferably an infrared emitter.

## Revendications

1. Procédé de fabrication additive, à base de lit de poudre, d'une pièce (2), comprenant
- l'exposition sélective d'une couche (10) en un matériau (7) pulvérulent à un premier faisceau (14) énergétique et à un deuxième faisceau (15) énergétique différent de celui-ci, dans lequel le deuxième faisceau (15) énergétique entoure annulairement le premier faisceau (14) énergétique, dans lequel le premier faisceau (14) énergétique représente un laser de fusion et le deuxième faisceau (15) énergétique un autre faisceau laser, qui a une intensité du rayonnement plus petite que le laser de fusion, dans lequel l'autre faisceau laser provoque un échauffement local, en particulier un échauffement préalable, de la couche à une température allant au-delà de 500 °C, et
- l'échauffement asélectif de la couche (10), dans lequel une grande partie de la couche (10) est portée à une température (T1) d'au moins un quart de la température (T2) que la couche (10) subit par l'exposition sélective, dans lequel l'échauffement asélectif s'effectue à une température comprise entre 50 °C et 100 °C en-dessous d'une température initiale pour la constitution de précipitations de phases, en particulier pour la constitution d'une phase gamma tiret du matériau.

2. Procédé suivant la revendication 1, dans lequel l'échauffement asélectif s'effectue à une température comprise entre 400 °C et 500 °C.

3. Procédé suivant la revendication 1 ou 2, dans lequel l'échauffement asélectif s'effectue en-dessous d'une température de frittage du matériau (7).

4. Procédé suivant l'une des revendications précédentes, dans lequel l'échauffement asélectif s'effectue par un chauffage par induction d'une chambre (4), par un chauffage par rayonnement, en particulier par un émetteur de rayon infrarouge ou par un chauffage d'une plateforme (3).

5. Procédé suivant l'une des revendications précédentes, dans lequel on effectue l'échauffement asélectif pour l'échauffement préalable de la couche (10).

6. Procédé suivant l'une des revendications précédentes, dans lequel on effectue l'échauffement asélectif en même temps que l'exposition sélective de la couche (10).

7. Procédé suivant l'une des revendications précédentes, dans lequel le matériau (7) est un alliage difficilement soudable, en particulier un super alliage à base de nickel ou de cobalt à durcissement γ'.

8. Procédé suivant l'une des revendications précédentes, dans lequel on soumet la pièce (2) fabriquée à un post-traitement thermique.

9. Procédé suivant l'une des revendications précédentes, dans lequel on dirige le premier faisceau (14) énergétique et le deuxième faisceau (15) énergétique sur la couche par une optique (13) commune.

10. Procédé suivant l'une des revendications précédentes, dans lequel on envoie le laser (14) de fusion et l'autre faisceau (15) laser à une optique (13) commune en passant par un diviseur (18) de faisceau semi-transparent.

11. Installation (1) de fabrication additive, à base d'un lit de poudre, d'une pièce (2), qui est agencée pour effectuer un procédé suivant l'une des revendications précédentes et qui comprend une plateforme (3), un dispositif (5) de revêtement, un laser (11) de fusion, un autre laser (12) et une optique (13) commune au laser (11) de fusion et à l'autre laser (12), et dans laquelle l'installation (1) comprend en outre un dispositif (19) d'échauffement asélectif de la couche (10), en particulier un dispositif de chauffage par induction d'une chambre, un chauffage par rayonnement, de préférence un émetteur du rayonnement infrarouge.
